# FASCICULE DE BREVET EUROPEEN

(11) **EP 3 947 153 B1**
(45) Date de publication et mention de la délivrance du brevet: **18.09.2024**
(21) Numéro de dépôt: 20723457.6
(22) Date de dépôt: 30.03.2020
(51) Int. Cl.: B64D 27/33, B64D 27/357, B64D 27/359, B64D 31/18, B64D 35/024, B64C 27/08, B64C 27/12

(54) **INSTALLATION PROPULSIVE HYBRIDE POUR UN AÉRONEF**
HYBRIDANTRIEBSEINHEIT FÜR EIN FLUGZEUG
HYBRID PROPULSION UNIT FOR AN AIRCRAFT

(30) Priorité: 02.04.2019 FR 1903501
(43) Date de publication de la demande: 09.02.2022
(73) Titulaire: Safran Helicopter Engines, 64510 Bordes (FR)
(72) Inventeur: KLONOWSKI, Thomas, 77550 MOISSY-CRAMAYEL (FR); BARRACO, Thomas, 77550 MOISSY-CRAMAYEL (FR)
(74) Mandataire: Gevers & Orès
(86) Numéro de dépôt international: PCT/FR2020/000074
(87) Numéro de publication internationale: WO 2020/201639

(56) Documents cités:
- EP-A1- 3 085 625
- EP-A1- 3 125 343
- EP-A1- 3 296 212
- FR-A1- 3 056 555
- US-A1- 2017 225 573

## Description

### Domaine technique de l'invention

L'invention concerne une installation propulsive hybride pour un aéronef à voilure tournante multi-rotors, et un aéronef comportant une telle installation propulsive hybride.

### Arrière-plan technique

L'état de la technique comprend notamment les documents EP-A1-3 085 625, EP-A1-3 296 212, FR-A1-3 056 555, EP-A1-3 123 343 et US-A1-2017/225573.

Il est connu de l'état de la technique une installation propulsive hybride d'un aéronef, communément appelée hybridation série, avec une génération de puissance thermoélectrique.

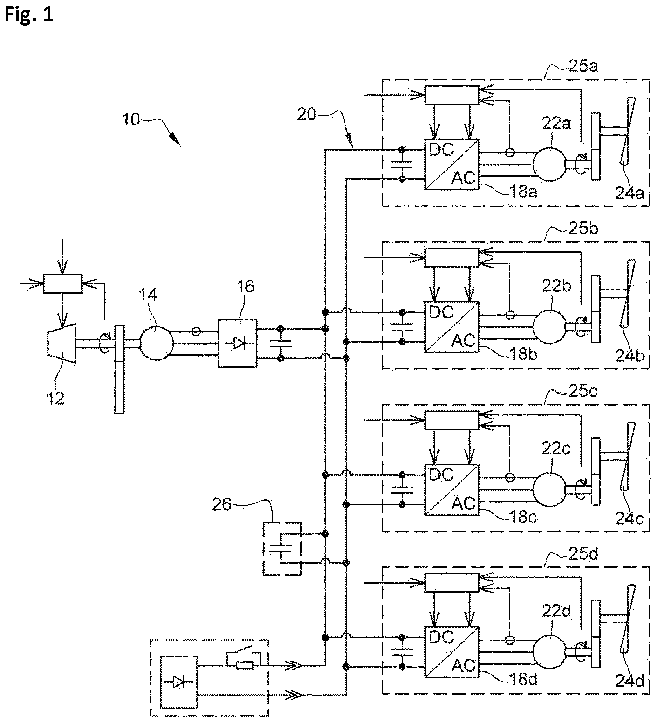

Comme représenté sur la figure 1, une installation propulsive hybride 10 comporte généralement :
- un moteur 12 à combustion interne,
- un générateur électrique 14 accouplé au moteur à combustion interne de sorte qu'en fonctionnement le moteur 12 à combustion interne entraîne le générateur électrique 14,
- un redresseur 16 relié au générateur électrique 14 et configuré pour convertir un courant alternatif délivré par le générateur électrique 14 en un courant continu,
- des moyens de conversion 18a, 18b, 18c, 18d du courant continu en courant alternatif,
- un réseau électrique 20 reliant le redresseur 16 aux moyens de conversion 18a, 18b, 18c, 18d,
- des moteurs électriques 22a, 22b, 22c, 22d reliés au moyens de conversion 18a, 18b, 18c, 18d de sorte qu'en fonctionnement les moyens de conversion 18a, 18b, 18c, 18d alimentent les moteurs électriques 22a, 22b, 22c, 22d en courant alternatif, et
- des hélices 24a, 24b, 24c, 24d accouplées aux moteurs électriques 22a, 22b, 22c, 22d de sorte qu'en fonctionnement les moteurs électriques 22a, 22b, 22c, 22d entraînent les hélices 24a, 24b, 24c, 24d.

Le réseau électrique 20 comporte généralement un bus de courant continu haute tension (connu sous l'acronyme HVDC de l'expression anglaise « High Voltage Discret Current »).

Dans une telle architecture, à partir d'une source de carburant fossile, le moteur 12 à combustion interne, et via une conversion mécanique-électrique, par le générateur électrique 14, une chaîne de propulsion électrique 25a, 25b, 25c, 25d composée par les moyens de conversion 18a, 18b, 18c, 18d, les moteurs électriques 22a, 22b, 22c, 22d et les hélices 24a, 24b, 24c, 24d permet de faire voler un aéronef à multi-voilures tournantes.

Un aéronef comportant une telle installation propulsive hybride est multi-rotors, ce qui permet d'avoir des degrés de liberté supplémentaires, par rapport aux aéronefs conventionnels, en ce qui concerne la pilotabilité de l'aéronef, par exemple le freinage, la stratégie d'évitement, le changement de direction, ou encore le basculement des rotors.

Pour une application dans un aéronef à décollage et atterrissage verticaux (VTOL, acronyme de l'expression anglaise « Vertical Take-Off and Landing »), ou pour une application dans un aéronef à décollage et atterrissage conventionnel, c'est-à-dire sur une piste (CTOL, acronyme de l'expression anglaise « Conventional Take-Off and Landing »), l'installation 10 comporte généralement une unité de stockage 26 qui a une fonction de réserve de l'énergie électrique nécessaire pour un mode d'atterrissage d'urgence ou pour terminer une mission particulière. Une unité de stockage 26 permet d'assurer une redondance dans la fourniture d'énergie électrique dans le cas où un turbogénérateur viendrait à être inopérant. De plus, une unité de stockage 26 peut être utilisée pour stabiliser la tension du bus HVDC, et donc de garder la contrôlabilité des hélices.

L'unité de stockage 26 comprend un ou une pluralité d'éléments de stockage secondaires sur le bus HVDC. Un élément de stockage secondaire est un élément de stockage rechargeable. Un élément de stockage secondaire peut être une batterie électrochimique, par exemple une batterie Li-lon ou Nickel-Métal Hydride (NiMH), ou un super-condensateur, ou un élément capacitif hybride.

L'élément de stockage secondaire nécessite un système de gestion de l'énergie (BMS, acronyme de l'expression anglaise « Battery Management System »).

Un BMS est un équipement complexe qui comporte des dispositifs de commutation de puissance et qui utilise de l'électronique pour contrôler l'état de charge, les paramètres de fonctionnement et l'état de santé de l'élément de stockage secondaire.

Une telle installation a une masse embarquée importante, et il est nécessaire d'assurer une gestion des risques électriques dans le contexte particulier de l'environnement embarqué aéronautique.

En effet, cette installation doit nécessairement intégrer des équipements électriques, qui sont lourds et imposants, pour permettre une bonne régulation du bus HVDC du réseau électrique 20 et une bonne stabilité.

L'unité de stockage 26, et plus précisément l'élément de stockage secondaire représente une masse non négligeable de l'installation 10. De plus, indépendamment de la technologie de l'élément de stockage secondaire, le BMS augmente la masse de l'installation d'environ 30%, et augmente également sa probabilité de défaillance.

Les éléments de stockage secondaires connus ont un taux d'autodécharge non négligeable, ce qui rend obligatoire la recharge périodique de ces éléments de stockage et impose donc la présence d'un chargeur, soit embarqué dans l'aéronef, soit dans les infrastructures au sol.

De plus, les éléments de stockage secondaires se dégradent peu à peu, même lorsqu'ils ne sont que rarement utilisés. Ces éléments de stockage doivent donc être testés et remplacés périodiquement.

Pour les applications VTOL et CTOL, ces éléments de stockage doivent toujours être actifs. Ainsi, l'installation peut fournir à tout moment de l'énergie électrique à ces éléments de stockage, dans des cas non désirés tels que les court-circuits, néfaste tant pour les éléments de stockage que pour le réseau électrique HVDC. Ces éléments de stockage peuvent également être déchargés prématurément par un phénomène de courant de fuite.

De tels éléments de stockage ne présentent en général pas une bonne tenue aux environnements sévères, tels que des températures froides et chaudes, ainsi qu'aux stress mécaniques, tels que des vibrations, ou des chocs. Pour tenir ces contraintes environnementales, ces éléments de stockage secondaires doivent être dimensionnés en conséquence, ce qui se traduit par une augmentation de la masse de l'unité de stockage à embarquer à bord de l'aéronef.

En outre, pour certaines technologies d'éléments de stockage secondaires, ces éléments de stockage peuvent devenir dangereux en cas d'emballement thermique. Un emballement thermique peut notamment être provoqué par des court-circuits externes ou internes à ces éléments de stockage, par leur surcharge, ou par d'autres causes, notamment environnementales.

Le couplage au réseau électrique d'un élément de stockage secondaire peut poser des problèmes compte tenu des interactions entre un réseau électrique, dont la tension peut varier à tout moment, et une batterie secondaire dont la tension est fonction de l'état de charge. Ainsi, des précautions doivent être prises pour éviter tout risque électrique, voire tout risque de disponibilité opérationnelle de l'élément de stockage. Ces précautions induisent une complexification du système.

L'invention a pour objectif de proposer une solution permettant de remédier à au moins certains de ces inconvénients.

### Résumé de l'invention

À cet effet, l'invention concerne une installation propulsive hybride pour un aéronef à voilure tournante multi-rotors, comprenant :
- un moteur à combustion interne,
- un générateur électrique accouplé au moteur à combustion interne de sorte qu'en fonctionnement le moteur à combustion interne entraîne le générateur électrique,
- un redresseur relié au générateur électrique et configuré pour convertir un courant alternatif délivré par le générateur électrique en un courant continu,
l'installation étant caractérisée en ce qu'elle comprend en outre :
- des moyens de conversion du courant continu en courant alternatif,
- un réseau électrique reliant le redresseur aux moyens de conversion, le réseau électrique comportant un bus de courant continu haute tension,
- des moteurs électriques reliés aux moyens de conversion de sorte qu'en fonctionnement les moyens de conversion alimentent les moteurs électriques en courant alternatif,
- des hélices accouplées aux moteurs électriques de sorte qu'en fonctionnement les moteurs électriques entraînent les hélices, et
- des moyens de stockage d'énergie électrique reliés au réseau électrique, lesdits moyens de stockage comportant au moins un élément de stockage primaire et au moins un élément de stockage secondaire et en ce que ledit au moins un élément de stockage primaire est relié en série avec le réseau électrique, et ledit au moins un élément de stockage secondaire est relié parallèle au réseau électrique.

Les moyens de stockage sont dits hybrides, puisqu'ils comportent à la fois un élément de stockage primaire, donc non rechargeable, et au moins un élément de stockage secondaire, donc rechargeable.

Dans le cas où un turbogénérateur devient inopérant, une installation propulsive hybride nécessite obligatoirement, par la suite, une opération de maintenance du système propulsif entier.

Selon l'invention, les moyens de stockage comprennent un élément de stockage primaire, qui peut être soit utilisable une seule fois, puis remplacé lors de la maintenance du moteur pour des besoins de fortes puissances et d'énergie, ou soit réutilisable pour des besoins de stabilisation de la tension du bus HVDC demandant de stocker de faible niveau d'énergie.

Un élément de stockage primaire n'est pas rechargeable, c'est-à-dire que cet élément de stockage est mono-coup. Un élément de stockage primaire est conçu pour produire un courant électrique par une réaction électrochimique qui n'est pas réversible. Cet élément de stockage ne peut pas se recharger par un courant électrique quand il est déchargé.

De ce fait, comme une opération de maintenance est nécessaire si un turbogénérateur est devenu inopérant, le fait d'intégrer un élément de stockage non rechargeable ne va pas pénaliser le système en termes de masse, et il ne sera pas nécessaire de prévoir un stock d'éléments de stockage primaires sur l'aéronef, puisque ces derniers seront remplacés suite à l'opération de maintenance.

Cette installation permet de réaliser le mode dégradé pour un atterrissage d'urgence à partir d'une perte d'une source principale de génération de courant. En effet, cette installation comporte la technologie des éléments de stockage amenant l'énergie électrique nécessaire à la sustentation de l'aéronef.

Dans l'installation selon l'invention, il n'y a avantageusement pas besoin de BMS ou de système de conversion électronique en aval des moyens de stockage permettant d'adapter la tension des moyens de stockage à la tension de bus HVDC. Ceci permet de simplifier l'installation et d'alléger la masse globale de l'architecture.

En outre, l'élément de stockage primaire n'a aucune autodécharge, et ne nécessite donc pas d'être rechargé, et ne subit aucune dégradation temporelle. Cet élément de stockage présente une bonne tenue aux environnements sévères, par exemple au-delà de 150°C, ainsi qu'aux stress mécaniques. De plus, l'élément de stockage primaire ne présente aucun risque d'emballement thermique.

L'installation propulsive hybride selon l'invention permet d'assurer une redondance dans la fourniture d'énergie électrique, de stabiliser la tension du bus HVDC, et donc de garder la contrôlabilité des chaînes de propulsion électriques.

Ainsi, elle permet de réaliser les fonctions d'atterrissage d'urgence.

Cette installation permet également de minimiser les contraintes électriques et les impacts sur le réseau électrique de bord de l'aéronef et sur le réseau de puissance, en termes de génération, de distribution, de batterie, et de problématiques de compatibilités électromagnétiques (CEM).

En outre, l'installation selon l'invention a une masse et un volume moins importants que les architectures selon l'art antérieur, et utilise des moyens de stockage totalement sécuritaires, sans être associés à un BMS complexe, comme dans les architectures selon l'art antérieur.

L'installation selon l'invention peut comprendre un contacteur, dit deuxième contacteur, agencé en parallèle avec l'élément de stockage primaire. Ce contacteur permet de gérer l'activation et l'inactivation de l'élément de stockage primaire. Comme l'énergie électrique nécessaire pour un cas d'urgence est délivrée par l'élément de stockage primaire et le réseau électrique, l'élément de stockage primaire peut avantageusement être sous-dimensionné en termes de puissance et d'énergie à délivrer.

Ainsi, dans ce mode de réalisation, la tension d'alimentation en cas d'urgence est dimensionnée de manière optimale, cette tension étant la somme de la tension délivrée par l'élément de stockage primaire et de la tension en sortie du redresseur. Ceci permet de minimiser l'intensité du courant circulant dans le réseau électrique.

L'élément de stockage primaire peut être dimensionné pour fournir une tension inférieure au niveau de tension généré dans le premier mode de réalisation. Ceci permet avantageusement de diminuer la masse et l'encombrement des moyens de stockage. L'installation peut également comprendre un contacteur, dit troisième contacteur, agencé en parallèle avec le générateur électrique. Ce contacteur permet de découpler le redresseur et l'élément de stockage primaire, de sorte que seul l'élément de stockage primaire fournisse de l'énergie électrique aux différentes chaines de propulsion électriques.

Un contacteur peut être du type électromécanique ou statique.

L'installation peut également comprendre une diode agencée en série avec l'élément de stockage primaire. Avantageusement, la diode permet d'éviter une réinjection de courant aux bornes du redresseur si le niveau de tension de l'élément de stockage primaire est ou devient supérieur à la tension en sortie redresseur.

Des moyens de filtrage peuvent être agencés en amont du redresseur de manière à respecter les exigences de stabilité réseau électrique.

L'élément de stockage primaire peut être formé par une pluralité de couples électrochimiques agencés en série.

Selon un mode de réalisation, l'élément de stockage primaire est formé par au moins un couple électrochimique amorcé. Autrement dit, l'élément de stockage primaire peut comprendre un ou une pluralité de couples électrochimiques « prêts à l'emploi », c'est-à-dire dont l'électrolyte mouille l'anode et la cathode. Avantageusement, ces couples électrochimiques primaires sont performants, ont une faible autodécharge, et ne subissent aucune dégradation temporelle. De plus, l'utilisation de tels éléments de stockage primaire permet de supprimer le BMS.

Selon un autre mode de réalisation, l'élément de stockage primaire est formé par au moins un couple électrochimique amorçable. Autrement dit, l'élément de stockage primaire peut comprendre un ou une pluralité de couples électrochimiques « inertes », c'est-à-dire dont l'électrolyte ne mouille pas l'anode et la cathode.

L'élément de stockage primaire peut être formé par au moins un couple électrochimique amorçable par voie thermique.

Avantageusement, de tels couples électrochimiques sont inertes électriquement et chimiquement lorsqu'ils ne sont pas activés.

Ces couples électrochimiques inertes n'ont aucune autodécharge, et ne nécessitent donc pas de chargeur pour les recharger. De plus, ces couples électrochimiques ne subissent aucune dégradation temporelle, et peuvent être garantis entre 15 ans et 20 ans. De plus, l'utilisation de tels couples électrochimiques permet de supprimer le BMS.

En outre, ces couples électrochimiques ne présentent aucun danger électrique, ni risque de décharge inopinée, puisqu'ils sont inertes électriquement.

Ces couples présentent une bonne tenue aux conditions sévères d'environnement, notamment au-delà de 150°C, puisqu'ils sont inertes chimiquement.

De plus, ces couples ne présentent aucun risque d'emballement thermique à l'état inerte.

Comme ces couples sont dans un état inactif, la résistance d'isolement entre les polarités positive et négative de ces couples est élevée, ce qui permet de pouvoir installer l'élément de stockage primaire sur une installation électrique, sans précaution préalable.

En particulier, le couplage au réseau électrique d'un élément de stockage électriquement inerte peut se faire facilement par mise en parallèle, dans ce cas l'élément de stockage est à l'état isolant, ou par mise en série, par exemple avec une diode, dans ce cas l'élément de stockage supporte l'état tension nulle.

De préférence, l'élément de stockage secondaire comprend une ou une pluralité de super-condensateurs.

Un tel élément de stockage secondaire est avantageusement simple à installer sur le réseau électrique et léger en terme de masse.

L'élément de stockage secondaire est utilisé pour stabiliser la tension du bus HVDC. Comme l'élément de stockage secondaire est rechargeable, ceci permet une stabilisation sur une bande fréquence allant du Hz jusqu'au kHz. L'élément de stockage secondaire a avantageusement une densité de puissance massique élevée, sans nécessairement avoir une densité d'énergie intermédiaire entre un condensateur électrolytique classique et une batterie.

L'invention concerna également un aéronef à voilure tournante multi-rotors, comprenant une installation propulsive hybride selon l'invention.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1 représente une installation propulsive hybride d'un aéronef selon l'art antérieur,
[Fig. 2] la figure 2 représente un exemple d'installation propulsive hybride d'un aéronef,
[Fig. 3] la figure 3 représente une installation propulsive hybride d'un aéronef selon un mode de réalisation de l'invention.

Les éléments ayant les mêmes fonctions dans les différentes mises en oeuvre ont les mêmes références dans les figures.

### Description détaillée de l'invention

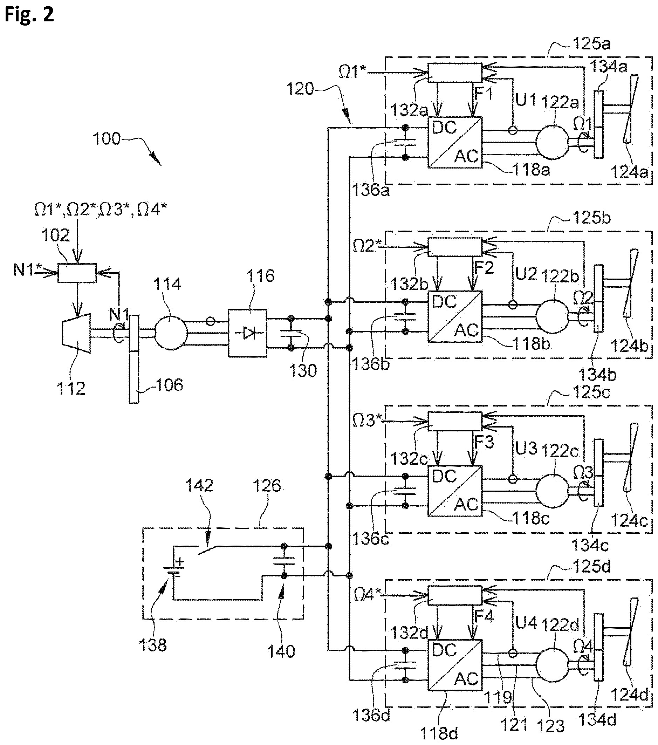

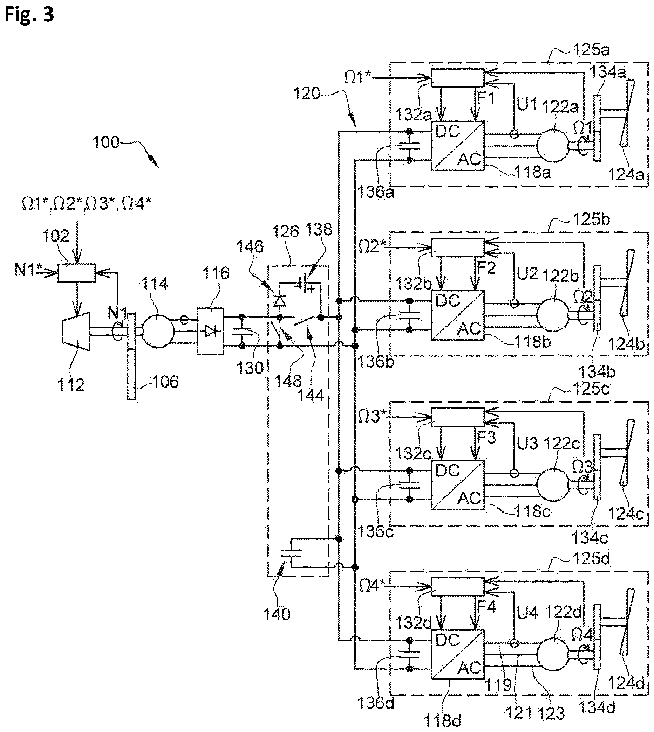

Les figures 2 et 3 représentent une installation propulsive hybride 100 d'un aéronef, par exemple de type hélicoptère ou avion, à voilure tournante multi-rotors respectivement selon un exemple différent de l'invention et selon l'invention. Par exemple, l'installation 100 peut être intégrée dans un aéronef dont le poids est inférieur à 5000 kg, avec une puissance mécanique embarquée comprise entre 50 kW et 2000 kW.

Un moteur 112 à combustion interne, telle qu'une turbomachine, par exemple un groupe auxiliaire de puissance (APU, acronyme de l'expression anglaise « Auxiliary Power Unit »), est accouplé à un générateur électrique 114. En fonctionnement, le générateur électrique 114 est entraîné par le moteur 112.

Le générateur électrique 114 peut être un moteur-générateur, c'est-à-dire qu'il peut être apte à fonctionner à la fois en mode générateur et en mode moteur. Autrement dit, le générateur électrique 114 peut fonctionner en mode générateur, notamment lorsqu'il est entraîné par le moteur 112, ou en mode moteur. Le générateur électrique 114 peut être une machine électrique synchrone ou asynchrone. Ainsi, le générateur électrique 114 peut être une machine électrique réversible. Le générateur électrique 114 peut alors permettre une conversion bidirectionnelle de l'énergie mécanique-électrique, c'est-à-dire une conversion mécanique-électrique et une conversion électrique-mécanique. Le générateur électrique 114 peut générer un courant électrique polyphasé, par exemple triphasé comme représenté sur les figures 2 et 3.

Le moteur 112 et le générateur électrique 114 constituent une source de génération principale pour l'installation 100. Bien qu'une seule source de génération principale soit représentée sur les figures 2 et 3, l'installation 100 peut comprendre une pluralité de sources de génération principales.

La vitesse de rotation N1 de l'arbre du rotor du moteur 112 relié au générateur électrique 114 peut être contrôlée par des moyens de commande 102 (EECU, de l'expression anglaise « Electronic Engine Control Unit »). Ces moyens de commande 102 peuvent contrôler des paramètres du moteur 112, tels que le débit massique carburant WF (« Weight Flow » en anglais) sur la base de la vitesse de rotation N1 et d'autres paramètres, comme la fréquence N1* du générateur électrique 114 ou une anticipation de la charge Ω1*, Ω2*, Ω3*, Ω4* pour chaque chaîne de propulsion électrique.

Une boite de vitesse auxiliaire 106 peut être agencée entre le moteur 112 et le générateur électrique 114.

Un redresseur 116 est relié à une entrée au générateur électrique 114 et configuré pour convertir le courant alternatif délivré par le générateur électrique 114 en un courant continu. Le redresseur 116 peut être réversible en courant. Un élément capacitif 130, par exemple un condensateur, peut être agencé en parallèle au générateur électrique 114.

Un réseau électrique 120 relie en parallèle une sortie du redresseur 116 à des entrées de moyens de conversion 118a, 118b, 118c, 118d.

Les moyens de conversion 118a, 118b, 118c, 118d sont configurés pour convertir un courant continu en un courant alternatif. Les moyens de conversion 118a, 118b, 118c, 118d peuvent comprendre des convertisseurs de courant continu en courant alternatif.

Les moyens de conversion 118a, 118b, 118c, 118d peuvent comprendre des onduleurs. Sur les figures 2 et 3, DC signifie courant continu (de l'expression anglaise « Direct Current ») et AC signifie courant alternatif (de l'expression anglaise « Alternative Current »). Chaque onduleur peut comprendre trois bras d'onduleurs délivrant respectivement les trois phases 119, 121, 123 (référencées uniquement pour les moyens de conversion 118d) de courant alternatif à chacun des moteurs électriques 122a, 122b, 122c, 122d.

Les moyens de conversion 118a, 118b, 118c, 118d, et en particulier les onduleurs, peuvent être réversibles en courant. Un élément capacitif 136a, 136b, 136c, 136d, par exemple un condensateur, peut être agencé en parallèle de chacun des moyens de conversion 118a, 118b, 118c, 118d.

Le réseau électrique 120 peut être bidirectionnel, c'est-à-dire que le courant électrique peut passer du redresseur 116 aux moyens de conversion 118a, 118b, 118c, 118d, et dans le sens opposé.

Des moteurs électriques 122a, 122b, 122c, 122d sont reliés au moyens de conversion 118a, 118b, 118c, 118d. En fonctionnement, les moteurs électriques 122a, 122b, 122c, 122d sont alimentés en courant alternatif par les moyens de conversion 118a, 118b, 118c, 118d.

Les moteurs électriques 122a, 122b, 122c, 122d peuvent être des moteurs synchrones polyphasés. Ces moteurs peuvent être de différents types, tels que des moteurs à induction ou des moteurs à reluctance variable. Ces moteurs peuvent être du type mono-stator et multi-rotors. Ceci permet avantageusement de réduire la masse et le volume des moteurs électriques 122a, 122b, 122c, 122d.

La liaison entre le générateur électrique 114 et les moteurs électriques 122a, 122b, 122c, 122d est opérée en courant continu, sous une tension relativement élevée, de manière à améliorer la stabilité du réseau électrique 120 et la gestion de puissance. Le redresseur 116 permet ainsi d'assurer la conversion du courant alternatif délivré par le générateur électrique 120 en en courant continu, tandis que les moyens de conversion 118a, 118b, 118c, 118d assurent la conversion de ce courant continu en courant alternatif destiné aux moteurs électriques 122a, 122b, 122c, 122d.

Des hélices 124a, 124b, 124c, 124d sont accouplées aux moteurs électriques 122a, 122b, 122c, 122d. En fonctionnement, les hélices 124a, 124b, 124c, 124d sont entraînées par les moteurs électriques 122a, 122b, 122c, 122d. Les hélices 124a, 124b, 124c, 124d peuvent être des hélices contra rotatives coaxiales.

En particulier, les moyens de conversion 118a, respectivement 118b, 118c, 118d, le moteur électrique 122a, respectivement 122b, 122c, 122d, et la ou les hélices 124a, respectivement 124b, 124c, 124d, forment une chaîne de propulsion électrique 125a, respectivement 125b, 125c, 125d. Sur les figures 2 et 3, il y a donc quatre chaînes de propulsion électrique 125a, 125b, 125c, 125d.

Pour chaque chaîne de propulsion électrique 125a, 125b, 125c, 125d, la vitesse de rotation Ω1, Ω2, Ω3, Ω4 de l'arbre reliant le moteur électrique 122a, 122b, 122c, 122d et les hélices 124a, 124b, 124c, 124d, via une boite de vitesse 134a, 134b, 134c, 134d, peut être contrôlée par des moyens de commande 132a, 132b, 132c, 132d. De même, la tension U1, U2, U3, U4 issue des moyens de conversion 118a, 118b, 118c, 118d pour alimenter chaque moteur électrique 122a, 122b, 122c, 122d peut être contrôlée par des moyens de commande 132a, 132b, 132c, 132d. Ces moyens de commande 132a, 132b, 132c, 132d peuvent contrôler des paramètres des moyens de conversion 118a, 118b, 118c, 118d, tels que la tension U1, U2, U3, U4 des moteurs électriques 122a, 122b, 122c, 122d et la fréquence machine F1, F2, F3, F4 sur la base de la vitesse de rotation Ω1, Ω2, Ω3, Ω4 et de la tension U1, U2, U3, U4 des moteurs électriques 122a, 122b, 122c, 122d, et d'autres paramètres, comme l'anticipation de la charge Ω1*, Ω2*, Ω3*, Ω4*.

Des moyens de stockage 126 sont reliés au réseau électrique 120. Ces moyens de stockage 126 permettent d'absorber un surplus d'énergie électrique provenant du bus HVDC du réseau électrique 120. Les moyens de stockage 126 peuvent aussi être configurés pour alimenter temporairement les moteurs électriques 122a, 122b, 122c, 122d en complétant ou en se substituant au générateur électrique 114.

Les moyens de stockage 126 comportent un ou une pluralité d'éléments de stockage primaires 138 et un ou une pluralité d'éléments de stockage secondaires 140.

Un élément de stockage secondaire 140 peut comprendre une ou une pluralité de batteries, un ou une pluralité de condensateurs, ou un ou une pluralité de super-condensateurs.

Un élément de stockage primaire 138 peut être formé par un ou une pluralité de couples électrochimiques. La pluralité de couples électrochimiques peut être agencée en série, en parallèle, ou en série-parallèle, c'est-à-dire que certains couples électrochimiques peuvent être agencés en série, et que cette série de couples électrochimiques est agencée en parallèle d'une autre série de couples électrochimiques ou d'un autre couple électrochimique.

Un élément de stockage primaire 138 peut être formé par un ou des couples électrochimiques amorcés. Ces couples électrochimiques amorcés sont dits « prêts à l'emploi », puisque l'électrolyte mouille l'anode et la cathode. L'élément de stockage primaire 138 peut être une pile.

Un élément de stockage primaire 138 peut être formé par un ou des couples électrochimiques amorçables. Ces couples électrochimiques amorçables sont dits « inertes », puisque l'électrolyte ne mouille pas l'anode et la cathode.

L'élément de stockage primaire 138 peut être une pile à électrolyte séparé. Plus précisément, l'électrolyte est disposé dans un réservoir annexe à la zone contenant l'anode et la cathode, et n'est libéré que lors de l'activation de l'élément de stockage primaire de manière à ce qu'il vienne au contact à la fois de l'anode et de la cathode. Les couples électrochimiques peuvent être amorçables par voie thermique. L'élément de stockage primaire 138 peut alors être une pile thermique. Plus précisément, l'électrolyte est solide à température ambiante, et est réchauffé lors de l'activation de l'élément de stockage primaire. L'électrolyte se liquéfie rapidement, puis vient au contact à la fois de l'anode et de la cathode.

Ces couples ont l'avantage d'être « inertes » électriquement et chimiquement lorsqu'ils ne sont pas activés.

Sur les figures 2 et 3, l'élément de stockage primaire 138 est représenté sous la forme d'une pile, + indiquant la borne positive et- indiquant la borne négative de la pile.

Selon l'exemple représenté en figure 2, l'élément de stockage primaire 138 est agencé en parallèle de l'élément de stockage secondaire 140. Les moyens de stockage hybrides 126 sont alors reliés en parallèle au réseau électrique 120.

L'élément de stockage primaire 138 peut être activé en cas d'urgence de différentes façons, par exemple par une activation pyrotechnique, ou par une activation électrique. Un contacteur 142, dit premier contacteur, peut être agencé entre l'élément de stockage primaire 138 et l'élément de stockage secondaire 140 de manière à pouvoir déconnecter l'élément de stockage primaire 138 lorsque celui est activé.

Comme aucune précaution n'est à prendre pour la connexion de l'élément de stockage primaire 138 au réseau électrique 120 dans le cas d'un couple électrochimique inerte, le premier contacteur 142 peut être optionnel.

Selon le mode de réalisation de l'invention représenté en figure 3, l'élément de stockage primaire 138 est relié en série avec le réseau électrique 120. Plus précisément, l'élément de stockage primaire 138 est relié en série avec le moteur 112 et avec le générateur électrique 114. L'élément de stockage secondaire 140 est relié parallèle au réseau électrique 120.

Un contacteur 144, dit deuxième contacteur, peut être agencé en parallèle avec l'élément de stockage primaire 138 de manière à pouvoir ajouter l'élément de stockage primaire 138 en série avec le moteur 112 et avec le générateur électrique 114. Lorsque l'élément de stockage primaire 138 est activé, il est en série avec le réseau électrique 120 associé au redresseur 116.

L'énergie électrique nécessaire pour un cas d'urgence est délivrée par l'élément de stockage primaire 138 et par le réseau électrique 120, ce qui permet de pouvoir sous-dimensionner l'élément de stockage primaire 138 en termes de puissance et d'énergie à délivrer. Le redresseur 116 peut alors être dimensionné de façon à admettre la tension qui en résulte et permettre de faire transiter la totalité de la puissance électrique nécessaire au cas d'urgence.

Une diode 146 peut être agencée en série avec l'élément de stockage primaire 138 de manière à éviter toute réinjection de courant aux bornes du redresseur 116 si le niveau de tension de l'élément de stockage primaire 138 est ou devient supérieur à la tension en sortie redresseur 116.

Des moyens de filtrage (non représentés) peuvent être agencés en amont du redresseur 116.

Un contacteur 148, dit troisième contacteur, peut être agencé en parallèle avec le générateur électrique 114. L'exemple représenté en Fig. 2 est avantageusement plus autonome que le mode de réalisation de l'invention représenté en Fig. 3 en termes de génération principale. Ainsi, dans mode de réalisation de l'invention, la génération principale peut être découplée et seul l'élément de stockage primaire 138 fournit alors l'énergie électrique aux différentes chaines de propulsion électriques 125a, 125b, 125c, 125d, grâce à la fermeture du contacteur 148. Le redresseur 116 peut alors ne plus conduire de courant sur le bus HVDC.

Les contacteurs 142, 144, 148 peuvent être du type électromécanique ou statique.

## Revendications

1. Installation (100) propulsive hybride pour un aéronef à voilure tournante multi-rotors, comprenant :
- un moteur (112) à combustion interne,
- un générateur électrique (114) accouplé au moteur (112) à combustion interne de sorte qu'en fonctionnement le moteur à combustion interne entraîne le générateur électrique,
- un redresseur (116) relié au générateur électrique (114) et configuré pour convertir un courant alternatif délivré par le générateur électrique en un courant continu,
l'installation (100) comprenant en outre :
- des moyens de conversion (118a, 118b, 118c, 118d) du courant continu en courant alternatif,
- un réseau électrique (120) reliant le redresseur (116) aux moyens de conversion (118a, 118b, 118c, 118d), le réseau électrique (120) comportant un bus de courant continu haute tension,
- des moteurs électriques (122a, 122b, 122c, 122d) reliés aux moyens de conversion (118a, 118b, 118c, 118d) de sorte qu'en fonctionnement les moyens de conversion alimentent les moteurs électriques en courant alternatif,
- des hélices (124a, 124b, 124c, 124d) accouplées aux moteurs électriques (122a, 122b, 122c, 122d) de sorte qu'en fonctionnement les moteurs électriques entraînent les hélices, et
- des moyens de stockage (126) d'énergie électrique reliés au réseau électrique (120), lesdits moyens de stockage (126) comportant au moins un élément de stockage primaire (138) et au moins un élément de stockage secondaire (140) et en ce que ledit au moins un élément de stockage primaire (138) est relié en série avec le réseau électrique (120), et ledit au moins un élément de stockage secondaire (140) est relié en parallèle au réseau électrique (120).

2. Installation (100) selon la revendication 1, comprenant également un contacteur (148) agencé en parallèle avec le générateur électrique (114).

3. Installation (100) selon l'une des revendications 1 ou 2, comprenant une diode (146) agencée en série avec l'élément de stockage primaire (138).

4. Installation (100) selon l'une des revendications précédentes, dans laquelle l'élément de stockage primaire (138) est formé par au moins un couple électrochimique amorcé.

5. Installation (100) selon l'une des revendications 1 à 4, dans laquelle l'élément de stockage primaire (138) est formé par au moins un couple électrochimique amorçable.

6. Installation (100) selon la revendication 5, dans laquelle l'élément de stockage primaire (138) est formé par au moins un couple électrochimique amorçable par voie thermique.

7. Installation (100) selon l'une des revendications précédentes, dans laquelle l'élément de stockage primaire (138) est formé par une pluralité de couples électrochimiques agencés en série.

8. Aéronef à voilure tournante multi-rotors, comprenant une installation (100) propulsive hybride selon l'une des revendications précédentes.

## Patentansprüche

1. Hybride Antriebsinstallation (100) für ein Luftfahrzeug mit Multirotor-Drehflügeln, umfassend:
- einen Verbrennungsmotor (112),
- einen mit dem Verbrennungsmotor (112) derart gekoppelten Stromgenerator (114), dass im Betrieb der Verbrennungsmotor den Stromgenerator antreibt,
- einen Gleichrichter (116), der mit dem Stromgenerator (114) verbunden und konfiguriert ist, einen von dem Stromgenerator abgegebenen Wechselstrom zu einem Gleichstrom umzuwandeln,
wobei die Installation (100) weiter umfasst:
- Mittel zur Umwandlung (118a, 118b, 118c, 118d) des Gleichstroms zu Wechselstrom,
- ein Stromnetz (120), das den Gleichrichter (116) mit den Mitteln zur Umwandlung (118a, 118b, 118c, 118d) verbindet, wobei das Stromnetz (120) einen kontinuierlichen Hochspannungs-Gleichstrombus beinhaltet,
- Elektromotoren (122a, 122b, 122c, 122d), die mit den Mitteln zur Umwandlung (118a, 118b, 118c, 118d) derart verbunden sind, dass im Betrieb die Mittel zur Umwandlung die Elektromotoren mit Wechselstrom speisen,
- Rotorblätter (124a, 124b, 124c, 124d), die mit den Elektromotoren (122a, 122b, 122c, 122d) derart gekoppelt sind, dass im Betrieb die Elektromotoren die Rotorblätter antreiben, und
- Mittel zur Speicherung (126) von elektrischer Energie, die mit dem Stromnetz (120) verbunden sind, wobei die Mittel zur Speicherung (126) mindestens ein primäres Speicherungselement (138) und mindestens ein sekundäres Speicherungselement (140) beinhalten, und dadurch, dass das mindestens eine primäre Speicherungselement (138) mit dem Stromnetz (120) in Reihe verbunden ist und das mindestens eine sekundäre Speicherungselement (140) mit dem Stromnetz (120) parallel verbunden ist.

2. Installation (100) nach Anspruch 1, ebenfalls umfassend einen Kontaktgeber (148), der parallel mit dem Stromgenerator (114) angeordnet ist.

3. Installation (100) nach einem der Ansprüche 1 oder 2, umfassend eine Diode (146) die in Reihe mit dem primären Speicherungselement (138) angeordnet ist.

4. Installation (100) nach einem der vorstehenden Ansprüche, wobei das primäre Speicherungselement (138) durch mindestens ein initiiertes elektrochemisches Element gebildet ist.

5. Installation (100) nach einem der Ansprüche 1 bis 4, wobei das primäre Speicherungselement (138) durch mindestens ein initiierbares elektrochemisches Element gebildet ist.

6. Installation (100) nach Anspruch 5, wobei das primäre Speicherungselement (138) durch mindestens ein auf thermischem Weg initiierbares elektrochemisches Element gebildet ist.

7. Installation (100) nach einem der vorstehenden Ansprüche, wobei das primäre Speicherungselement (138) durch eine Vielzahl von in Reihe angeordneten elektrochemischen Elementen gebildet ist.

8. Luftfahrzeug mit Multirotor-Drehflügeln, umfassend eine hybride Antriebsinstallation (100) nach einem der vorstehenden Ansprüche.

## Claims

1. A hybrid propulsion unit (100) for an aircraft with multi-rotor rotary wing, comprising:
- an internal combustion engine (112),
- an electric generator (114) coupled to the internal combustion engine (112) such that in operation the internal combustion engine drives the electric generator,
- a rectifier (116) connected to the electric generator (114) and configured to convert an alternative current delivered by the electric generator into a direct current,
the hybrid propulsion unit (100) further comprising:
- means (118a, 118b, 118c, 118d) for converting direct current into alternative current,
- an electrical network (120) connecting the rectifier (116) to the conversion means (118a, 118b, 118c, 118d), the electrical network (120) comprising a high voltage direct current bus,
- electric motors (122a, 122b, 122c, 122d) connected to the conversion means (118a, 118b, 118c, 118d) so that in operation the conversion means supply the electric motors with alternative current,
- propellers (124a, 124b, 124c, 124d) coupled to the electric motors (122a, 122b, 122c, 122d) so that in operation the electric motors drive the propellers, and
- means (126) connected to the electrical network (120), said storage means (126) comprising at least one primary storage element (138) and at least one secondary storage element (140), and in that said at least one primary storage element (138) is connected in series with the electrical network (120), and said at least one secondary storage element (140) is connected in parallel with the electrical network (120).

2. The unit (100) according to claim 1, also comprising a contactor (148) arranged in parallel with the electric generator (114).

3. The unit (100) according to any one of claims 1 or 2, comprising a diode (146) arranged in series with the primary storage element (138).

4. The unit (100) according to any one of the preceding claims, wherein the primary storage element (138) is formed by at least one ignited electrochemical couple.

5. The unit (100) according to any one of claims 1 to 4, wherein the primary storage element (138) is formed by at least one ignitable electrochemical couple.

6. The unit (100) according to claim 5, wherein the primary storage element (138) is formed by at least one thermally ignitable electrochemical couple.

7. The unit (100) according to any of the preceding claims, wherein the primary storage element (138) is formed by a plurality of electrochemical couples arranged in series.

8. An aircraft with multi-rotor rotary wing, comprising a hybrid propulsion unit (100) according to one of the preceding claims.
